# EUROPEAN PATENT APPLICATION

(11) **EP 2 736 006 A1**
(43) Date of publication of application: **28.05.2014**
(21) Application number: 13193950.6
(22) Date of filing: 21.11.2013
(51) Int. Cl.: G06Q 20/32

(54) **Near field communication (NFC) device**

(30) Priority: 21.11.2012 GB 201220958
(71) Applicant: Proxama Solutions Limited, Norwich, Norfolk NR3 1TN (GB)
(72) Inventor: Taylor, James, Norwich, Norfolk NR3 1TN (GB); Garner, Neil, Norwich, Norfolk NR3 1TN (GB)
(74) Representative: Thompson, Andrew John

(57) **Abstract**

A device 2 comprising a NFC enabled circuit 2.2 having a memory and being operable to receive data and store the received data in the memory; and a microprocessor 2.1 for reading the received data stored in the NFC tag memory; wherein, the microprocessor 2.1 is arranged to detect when the NFC enabled circuit memory is altered by the addition of the received data; and read the received data from the NFC enabled circuit memory.

## Description

The invention relates to a Near Field Communication (NFC) device, a method of operation of the device and a system including the device.

### BACKGROUND

NFC is a short range wireless connectivity technology standard designed for communication between consumer devices. NFC works based on radio frequency identification technology which makes use of interacting electromagnetic radio fields. NFC sometimes requires a distance of around 25 mm between devices to establish communication. This short effective distance is used to maintain security of the communication. Typical NFC devices include mobile phones, bank cards, travel cards, etc.

International Organization for Standards (ISO)/International Electrotechnical Commission (IEC) 14443 is an international standard for Contactless Smart Cards operating at 13.56 MHz in close proximity with a reader antenna. Proximity Integrated Circuit Cards (PICCs) are intended to operate within approximately 100 mm of the reader antenna. The standard uses a half duplex communication scheme with a 106 kbit per second data rate in each direction. Data transmitted by the card is load modulated with a 847.5 kHz subcarrier.

Information can be transferred during an NFC connection between a first and a second NFC enabled device. Each device may read data from the other device, write data to the other device, or read and write data depending upon how each device is configured.

The NFC standards distinguish between a passive and an active operation modes for communication:
1. In the passive mode, only a first device which starts a communication (the initiator) producing a 13.56 MHz Radio Frequency (RF) carrier field. A second device (the target) introduced to this field may use it to draw energy but does not generate a carrier field of its own. The initiator transfers data by directly modulating the carrier field, while the target transfers data by load-modulating the carrier field. In this passive mode, the initiator acts as an active device and the target acts as a passive device.
2. In the active mode, two devices produce and emit a RF field and each device transmits data by generating and modifying its own emitted RF field. In this active mode, the initiator acts as an active device and the target also acts as a active device.

Current contactless Point-of-Sale (POS) systems use standards based on ISO/IEC 14443 for contactless card payments using NFC technology. A consumer can pay a vendor by bringing a passive NFC payment card or other NFC-enabled payment device, such as a phone or key fob, into proximity of an active NFC POS terminal reader. The active NFC reader device sets up a secure connection with the passive NFC payment device and processes account information passed to it by the passive NFC payment device.

Passive NFC store loyalty cards use a system similar to contactless POS systems to pass loyalty card information to active NFC store reader devices. Mobile payment systems, such as Google Wallet (RTM) for example, allow consumers to store loyalty card information as well as credit card information in a virtual wallet on a mobile device and then use an NFC-enabled device at a POS terminal.

Mobile devices require a secure element to enable them to conduct NFC transactions. The secure elements are controlled by a trusted service manager (TSM), which functions as a neutral broker to set up business agreements and technical connections with mobile network operators, phone manufacturers or other entities controlling the secure element on the mobile device. The TSM enables service providers to distribute and manage their contactless applications remotely by allowing access to the secure element in NFC-enabled handsets. However, the use of a TSM involves a deployment cost which is payable based on the number of users and/or a percentage of any transaction performed using the secure element. Procedures for registering a user with a TSM can be lengthy as well as costly owing to the organisation of access rights to the secure element.

Contactless alternatives to NFC loyalty cards include paper, cardboard or plastic tags with either one or two dimensional barcodes printed on them containing encoded loyalty account information. The barcode information may be altered by the physical degradation of either the tag or the printed information on the tag. Other disadvantages are that the amount of information storable within the barcode is small, and that a consumer must maintain multiple cards for multiple accounts.

### STATEMENTS OF INVENTION

A first aspect of the invention relates to a device comprising a NFC enabled circuit having a memory and being operable to receive data and store the received data in the memory, and a microprocessor for reading the received data stored in the NFC enabled circuit memory. The microprocessor is arranged to (i) detect when the NFC enabled circuit memory is altered by the addition of the received data; and (ii) read the received data from the NFC enabled circuit memory.

The device operates automatically to read the received data when the memory has been altered. Advantageously, the data received by device will not degrade in the same way as information stored on a physical medium, such as a paper barcode. The device can be used to receive loyalty card information. The electronic storage of the information removes the need for plastic cards carrying the membership number information, which also reduces waste.

Preferably, the microprocessor further arranged to parse the received data and transmit the parsed data in a predetermined format, which, preferably, is a text format. Preferably, the device is operable to emulate a Human Interface Device (HID) to transmit the parsed data. The emulation of a HID allows data to be transmitted to a further device where is received and handled in a common way. The further device will already possess protocols to handle data received from a HID.

Preferably, the microprocessor further arranged to transmit the parsed data over a bus selected from the group consisting of a WLAN, a PAN, a USB or a Bluetooth (RTM) connection. The commonly used data busses allows the device to be easily connected to other devices allowing interactions.

Preferably, the NFC enabled circuit operates in a passive NFC mode. Preferably, the NFC enabled circuit is operable to receive and store data from a second NFC enabled device operating in an active NFC mode. The device is able to receive data from any active NFC-enabled devices in a standard and commonly used way maximising operability with the device.

Preferably, the data is a type selected from the group consisting of a voucher code, a loyalty card number, a telephone number, a postal address, an Internet Protocol (IP) address, or a passport number.

Preferably, the device forms part of a sales terminal. The device acts as an interface to a sales terminal effectively NFC-enabling the sales terminal without requiring an upgrade to the sales terminal hardware.

A second aspect of the invention relates to a method of NFC comprising establishing a NFC connection to an intermediate device, receiving of data by the intermediate device over the NFC connection using a NFC protocol, storing the data in a memory of the intermediate device, detecting that the memory of the intermediate device has been altered by the addition of the data, and reading the received data from the memory of the intermediate device.

Preferably, the intermediate device is operated in a passive NFC mode.

Preferably, the method further comprises parsing the data by the intermediate device to convert it into a predetermined format, which preferably is a text format.

Preferably, the method further comprises transmitting the data by the intermediate device over a second connection. Preferably, the method further comprises emulating a Human Interface Device (HID) by the intermediate device to transmit the data over the second connection .

Preferably, the method further comprises resetting the memory of the intermediate device after the data is transmitted by the intermediate device.

Preferably, the intermediate device forms part of a sales terminal.

A third aspect of the invention relates to a NFC system comprising a NFC enabled mobile device; and a NFC enabled intermediate device comprising a NFC enabled circuit having a memory and being operable to receive data and store the received data in the memory, and a microprocessor for reading the received data stored in the NFC enabled circuit memory. The mobile device is operable to set up a NFC connection with the intermediate device. The mobile device is operable to send data over the NFC connection to the intermediate device where it is received by a NFC enabled circuit and stored in a memory of the NFC enabled circuit. The microprocessor of the intermediate device is arranged to detect when the NFC enabled circuit memory is altered by the addition of the received data, and read the received data from the NFC enabled circuit memory.

The system is operable in a manner that does not involve TSM support on the mobile device. The mobile device therefore has no 'deployment' cost per user.

Preferably, the NFC enabled intermediate device is operable in a passive NFC mode and the NFC enabled mobile device is operable in an active NFC mode.

Preferably, the microprocessor of the intermediate device is arranged to parse the data and convert it into a predetermined format, which preferably is a text format.

Preferably, the NFC system further comprises a terminal, wherein a bus link is set up between the intermediate device and the terminal. Preferably, the bus connection is set up over a medium selected from the group consisting of a WLAN, a PAN, a USB or a Bluetooth (RTM) connection.

Preferably, the intermediate device is arranged to emulate a HID to set up the bus connection with the terminal. Preferably, the intermediate device is arranged to transmit the data to the terminal over the bus link.

Preferably, the intermediate device is arranged to reset its memory after the data is transmitted from the intermediate device to the terminal. The resetting of the memory allows further detection of written data.

Preferably, the intermediate device forms part of the terminal. Preferably, the terminal is a sales terminal.

Preferably, after the mobile device has set up a NFC connection with the intermediate device, the intermediate device arranged to transmit identifier information to the mobile device.

Preferably, the mobile device is arranged to launch an application after it receives the identifier information. The application's functionality depends on the received data and may be specific to the intermediate device or to a group to which the particular intermediate device belongs. Preferably, there are a plurality of applications launchable on the mobile device and the specific application launched is dependent upon the content of the identifier information. A user of the mobile device can have different applications on their mobile device which hold different pieces of information, for example a first application may relate to voucher codes and a second application may relate to discount codes.

An application may be launched on the mobile device prior to the mobile device receiving the identifier information. The received identifier information is or is not passed to the application dependant upon content of the identifier information.

The launched application may prompt a user of the mobile device to consent to sending the data over the NFC connection to the intermediate device. The launched application may prompt a user of the mobile device to select one piece of data of a plurality of pieces of data to send over the NFC connection to the intermediate device.

The mobile device is operable by a user who can manage which applications they want to interact over the NFC connection using a user interface on the mobile device. Multiple user accounts, such as a plurality of loyalty memberships do not require the same number of physical loyalty cards to be held and carried by the user.

The launched application may make a decision of whether or not to transmit data over the NFC connection to the intermediate device automatically, and the decision is based upon data on the mobile device other than the received identifier information data. The user of the mobile device may, for example, have previously selected to apply a default action regarding the transmission of data.

### BRIEF DESCRIPTION OF DRAWINGS

The invention will now be described, by way of example only, with reference to the accompanying drawings, in which:
Figure 1 is a schematic diagram of an NFC connection between two NFC enabled devices as know from the prior art;
Figure 2 is a schematic diagram of an NFC connection according to the present invention between two devices using an intermediate device;
Figure 3 is a flow chart of a process performed by the intermediate device of Figure 2;
Figure 4 is an interaction diagram of the data flowing between the two devices shown in Figure 2; and
Figure 5 is a schematic diagram showing data transfer between the two devices shown in Figure 2 using an NFC enabled intermediate device.

### DETAILED DESCRIPTION OF DRAWINGS

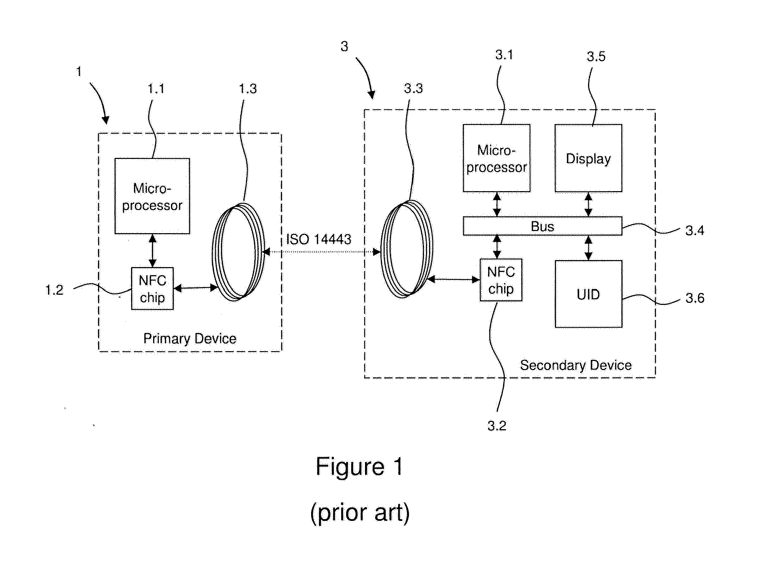

Figure 1 shows a NFC connection between a NFC enabled primary device 1 and a NFC enabled secondary device 3. The NFC enabled Primary Device 1 comprises a microprocessor 1.1 coupled to a NFC chip 1.2, which is coupled to an antenna 1.3. The microprocessor 1.1 sends data, such as commands or information, to the NFC chip 1.2, which then broadcasts the data. The NFC chip 1.2 broadcasts by oscillating an electric current in the antenna 1.3 so that an electromagnetic field is emitted from the antenna.

The first stage of communication by the Primary Device 1 is polling to any other NFC enabled device in range. The ISO/IEC 14443 standard defines signals emitted by the antenna coupled to the NFC chip 1.2.

Figure 1 also shows a Secondary Device 3 comprising a second NFC chip 3.2 connected to a second antenna 3.3 and a internal data bus 3.4. The internal data bus 3.4 connects to a second microprocessor 3.1, a display and a user interface device (UID) 3.6.

The second antenna 3.3 may be introduced into range of an electromagnetic field emitted by the first antenna 1.3 inducing an electric current within the second antenna 3.3. The induced current contains information transmitted by the first NFC chip 1.2 and can be read by the second NFC chip 3.2. The second NFC chip 3.2 is operable to induce a current in the second antenna 3.3 and thereby transmit information to the first NFC chip 1.2. The first and second NFC chips 1.2, 3.2 can communicate information by passing electromagnetic fields between the first and second antenna 1.3, 3.3.

The Primary Device 1 may be, for example, a NFC enabled cellular phone or tablet computer and the secondary device 3 may be, for example, an NFC enabled cash register terminal or another NFC enabled computing device.

Both the Primary Device 1 and the Secondary Device 3 require NFC circuitry in order for them to communicate using NFC. The primary and secondary devices 1, 3 may communicate in either an active or a passive mode.

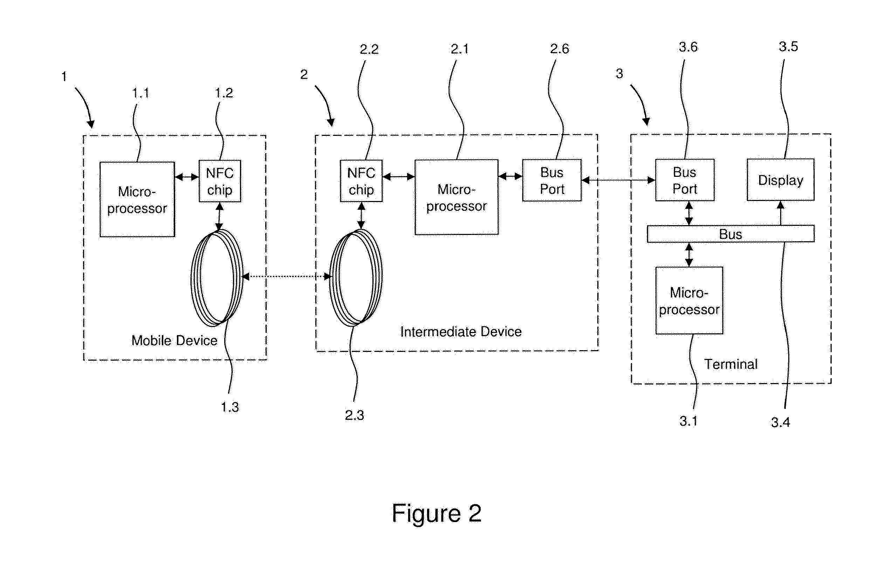

Figure 2 shows an embodiment of the present invention in which the primary device of Figure 1, labelled as a Mobile Device 1, is communicating with a Terminal 3 via an Intermediate Device 2. The Mobile Device 1 may be a cell phone or a tablet computer, for example, and the Terminal 3 may be a sales terminal, for example.

The Intermediate Device 2 comprises a microprocessor 2.1 coupled to a NFC chip 2.2, an antenna 2.3 and a bus port 2.6, wherein the antenna 2.3 is coupled to the microprocessor 2.1 via the NFC chip 2.2.

The Mobile Device 1 provides the features of the Primary Device 1 of Figure 1. The Mobile Device 1 is operable to transmit information by broadcasting an electromagnetic field and modulating the information onto the field which is received by the antenna 2.3 of the Intermediate Device 2. The information is demodulated by the NFC chip 2.2 of the Intermediate Device 2.1. The NFC chip can modulate information onto a signal and broadcast the signal to the Mobile Device 1 using the antenna 2.3 of the Intermediate Device 2. In this embodiment the NFC chip 2.2 of the Intermediate Device is a passive NFC device. The microprocessor 2.1 can read and write information from and to a memory of the NFC chip 2.2. Information from the microprocessor 2.1 can therefore be transmitted and received using the antenna 2.3 by the microprocessor 2.1 writing to and reading from the NFC chip 2.2.

The Terminal 3 is a computing device comprising a microprocessor 3.1, an internal bus 3.4, a display 3.5 and a bus port 3.6. The internal bus 3.4 conveys data between the aforementioned components of the Terminal 3. In this manner, data can be sent and received between the microprocessor 3.1 and a device connected to the bus port 3.6. Data can also be sent to the display 3.5 from the microprocessor 3.1.

A bus connection is established between the bus port 2.6 of the Intermediate Device 2 and the bus port 3.6 of the Terminal 3 enabling the transfer of data there between. The bus connection allows communication via the respective bus ports 2.6, 3.6 of the microprocessors 2.1, 3.1 of the Intermediate Device 2 and the Terminal 3. The bus connection may be wired or wireless, for example RS232, Wireless Local Area Network (WLAN), Personal Area Network (PAN), Universal Serial Bus (USB), or Bluetooth ™, and may comprise further nodes such as an internet or the Internet.

In one embodiment, the bus port 2.6 of the Intermediate Device 2 is arranged to emulate a UID or, more specifically, a keyboard. Data transmitted by the Intermediate Device 2 microprocessor 2.1 to the Terminal 3 1s transmitted over the bus link in a format consistent with that supplied by a UID/keyboard. The Terminal 3 receives the data over the bus link and treats the data as if it was inputted by the UID. If the Intermediate Device 2 emulates a keyboard, the microprocessor 2.1 may parse the data to ensure that it is in a suitable format (standard and/or extended American Standard Code for Information Interexchange (ASCII) characters) and also add additional characters to the transmitted information, such as a carriage return or a newline at the end of the received data.

In the above-described embodiment, the NFC chip 2.2 of the Intermediate Device 2 is a passive NFC device. In another embodiment, the NFC chip 2.2 of the Intermediate Device 2 is an active NFC device that is arranged to function in a passive mode, thus the Intermediate Device appears as a passive NFC device to a connecting device, such as the Mobile Device 1.

In another embodiment, the NFC chip 2.2 of the Intermediate Device 2 is an active NFC device that is arranged to function in an active mode.

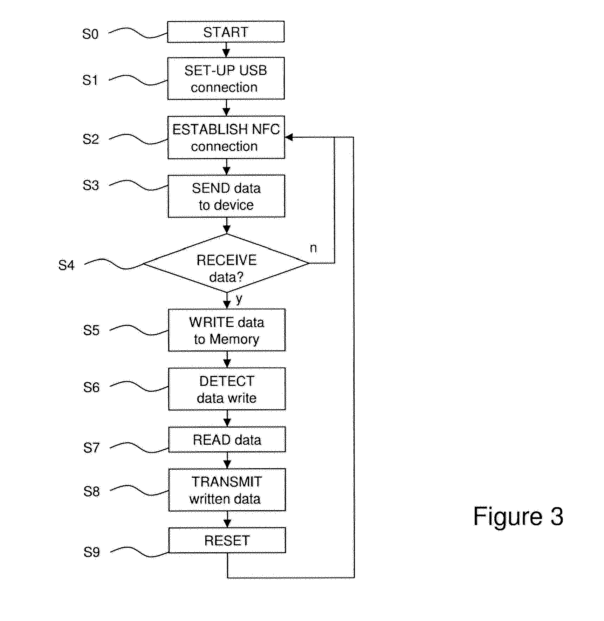

Figure 3 shows a flow chart illustrating a method performed by an embodiment of the Intermediate Device shown in Figure 2.

At step S0, the method begins and progresses to step S1 where the Intermediate Device sets-up a bus connection to the Terminal over a USB link. The bus connection is between the bus ports of the Intermediate Device and the Terminal.

At step S2, The Intermediate Device waits for a NFC connection to be established between it and the Mobile Device, which is an active NFC device in an active mode. The Mobile Device may be out of range at this point or not have its NFC system active. When the NFC connection between the Mobile Device and the Intermediate Device is established, the method proceeds to step S3.

At step S3, the Intermediate Device transmits data to the Mobile Device. The data identifies the Intermediate Device. The transmitted data may include information identifying the Intermediate Device as belonging to a particular group of similar devices. The transmitted data may also associate the Intermediate Device with the Terminal to which it is connected.

At step S4, the Intermediate Device waits for data to be received from the Mobile Device. If data is received from the Mobile Device, the method proceeds to step S5.

At step S4, if data is not received from the Mobile Device, the method returns to step S2 where the device waits for a new NFC connection to another (or the same) NFC device. The method may wait for data to be received at step S4 for a predetermined amount of time prior to returning to step S2. If the Mobile Device disconnects at this step, the method returns to step S2.

At step S5, the data received from the Mobile Device is written to a memory of the Intermediate Device.

At step S6, the data write of the previous step is detected. In one embodiment this is done by monitoring the memory addresses to be written to when data received by the NFC tag of the Intermediate Device is altered. In another embodiment, the NFC tag transmits the received data to the Intermediate Device microprocessor.

At step S7, the received data is read by the Intermediate Device microprocessor. The data may be parsed to ensure that all of the data is in a particular format, such as standard ASCII characters, standard and extended ASCII characters, Unicode, alphanumeric characters (i.e. 1, 2, 3, a, b, c, a, β, γ, Á, Ä, Æ, etc.) or non-alphanumeric characters (i.e. !, ", £, $, €, %, ^, &, *, etc.). In a further embodiment, if the received data is not in a character form, the received data is converted into one of the aforementioned character forms. Additional characters may be added to the received data, such as a carriage return or a newline at the end of the received data.

At step S8, the data received from the Mobile Device by the Intermediate Device is transmitted over the bus connection to the Terminal.

At step S9, the memory of the Intermediate Device is reset and the method returns to step S2 where the device waits for another NFC connection. This new connection may be from the Mobile Device or another NFC enabled device.

In other embodiments, step S1 is performed later in the method than described above, but necessarily prior to step S8. Step S1 may comprise setting up a bus link of an alternate form to USB, such as a RS232, WLAN, PAN, or Bluetooth ™.

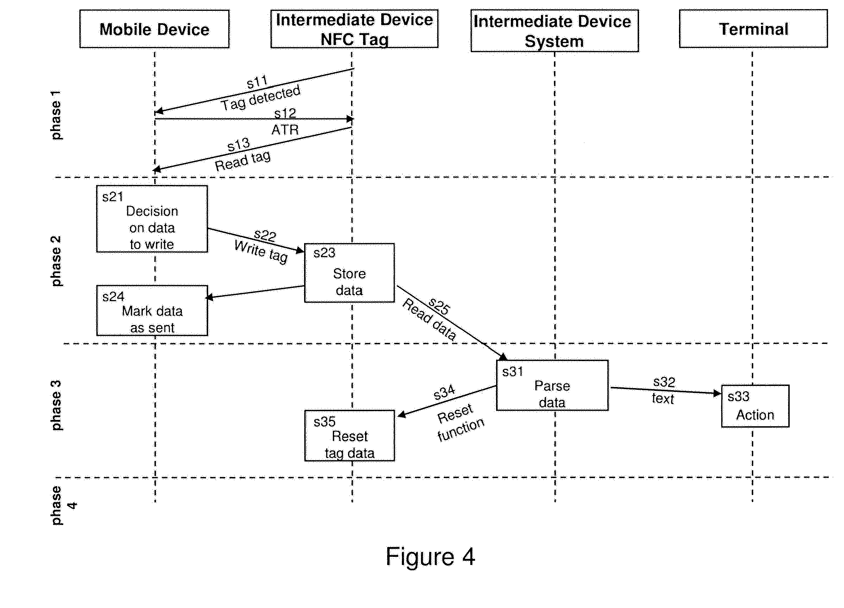

Figure 4 shows an interaction diagram of data flowing between the Mobile Device; the NFC Tag and a System running on the microprocessor of the Intermediate Device; and the Terminal of the embodiment of the invention shown in Figure 2.

The interactions of the diagram are split into four phases - phase 1, phase 2, phase 3 and phase 4 - listed on the left of the figure and delineated by horizontal dashed lines.

At the first step of the first phase (step s11) a user of the NFC enabled Mobile Device places the device proximate to the area surrounding an NFC tag, thus bringing the Mobile Device into range of the NFC Tag of the Intermediate Device. The NFC enabled mobile device is an active device and broadcasts an RF signal with data directly modulated onto a carrier field, which is received and demodulated by the NFC Tag. The NFC Tag load-modulates a response onto the carrier signal and broadcasts this to the Mobile Device.

The Mobile Device broadcasts an Answer-To-Reset (ATR) signal to the NFC Tag (step s12) conveying information about the communication parameters proposed by the device, and its nature and state. The NFC tag of the Intermediate Device responds setting up a NFC link between the Mobile Device and the Intermediate Device.

The Intermediate Device NFC Tag transmits data stored in its memory to the Mobile Device (step s13). This data provides the Mobile Device with information about the NFC Tag. The data may identify the tag within a specific group of tags. It also indicates that the Intermediate Device NFC Tag memory is empty.

The Mobile Device, upon receipt of the data from the NFC Tag, launches an application (step s21) to prompt the user of the Mobile Device to select information to send to the NFC Tag. If selected by the user, the Mobile Device will send data to the NFC Tag (step s22), which is stored in the NFC Tag memory (step s23). The NFC Tag responds to the transmission acknowledging receipt and the Mobile Device application marks the data as sent (step s24).

The Intermediated Device System monitors the NFC Tag memory. The alteration of the Tag Memory (in step s23) initiates reading of the NFC Tag memory by the System (step s25).

A processor of the System parses the data received from the NFC Tag and converts it into a string of characters (step s31). A bus link has been set up between the Intermediate Device System and the Terminal. The System emulates a UID keyboard for the purpose of setting up the bus link. The processor transmits the string to the Terminal over the bus link (step 32). The Terminal receives the string of characters as though it was from a UID keyboard and the characters are 'typed' on the Terminal. The Terminal can then process the data contained by the 'typed' characters (step s33).

After the Intermediate Device System transmits the data to the Terminal, it executes a reset function to the NFC Tag (step s34), which erases any data written to the tag at steps s22 and s23.

In phase 4, the NFC Tag memory is empty once again and the interaction can be restarted by another or the same Mobile Device.

In another embodiment, at step s21, upon receipt of the data from the NFC Tag, the Mobile Device alerts an already running application to prompt the user of the Mobile Device to select information to send to the NFC Tag.

In yet another embodiment, at step s21, upon receipt of the data from the NFC Tag, the Mobile Device automatically makes a decision whether or not to send information to the NFC Tag. The automatic decision may be based on previous information input into the Mobile Device by the user. Alternatively, the automatic decision is based on the data received from the NFC Tag (in step s13).

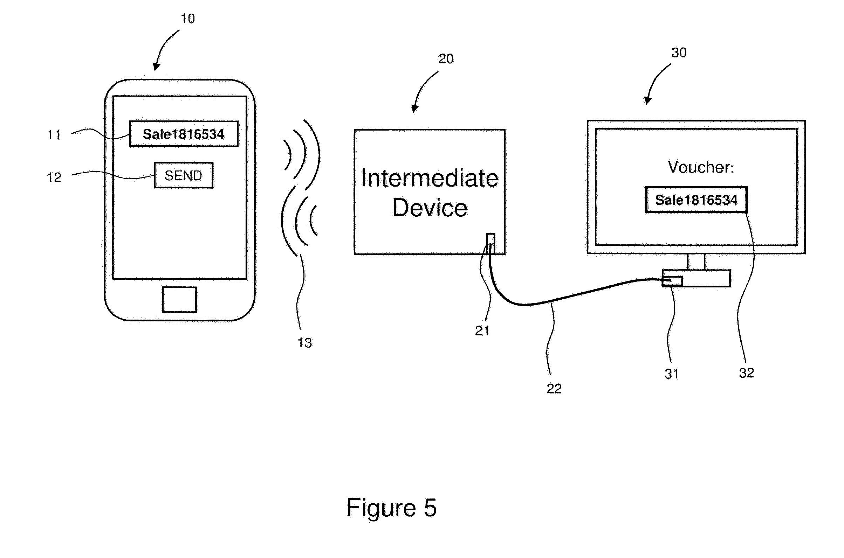

Figure 5 shows an embodiment where an Intermediate Device 20 is used to transmit data in the form of a voucher code from a Mobile Device (Cell Phone 10) to a Terminal (Sales Terminal 30).

A user brings the Cell Phone to the Intermediate Device 20 and an NFC connection 13 is established between the two (s11 and s12 of Figure 4). An NFC tag of the Intermediate Device 20 identifies itself as a sales terminal of a particular store chain to a NFC tag of the Cell Phone 10 (s13 of Figure 4). The Cell Phone 10 launches an application corresponding to the particular store chain based on the data received from the Intermediate Device 20. The user of the Cell Phone 10 is presented with the screen shown in Figure 5 and has the option to transmit a Voucher Code 11 by clicking on a SEND button 12 (s21 of Figure 4). Alternatively, the user may be presented with a plurality of pieces data items where one or more may be selected for transmission. Alternatively, this step is automatic and does not require the user input.

Once the user clicks the SEND button, the Voucher Code is transmitted using NFC to the Intermediate Device 20 (s22 of Figure 4) where the Voucher Code data is stored in a memory of the Intermediate Device (s31 of Figure 4). The addition to the Intermediate Device memory is detected and this detection initiates reading of the stored Voucher Code data by a processor of the Intermediate Device (s25 of Figure 4). The read Voucher Code data is parsed (s31 of Figure 4) to convert it to a character string, if required. Additional characters, such as carriage return may be added to the end of the string.

The Intermediate Device 20 is connected to the Sales Terminal 30 by a USB link comprising a USC cable connecting two USB ports 21, 31. When setting up the USB connection, the Intermediate Device 20 emulates a keyboard UID and transmits data over the USB link as keyboard keystrokes.

The Intermediate Device 20 transmits the parsed character string over the USB link to the Sales Terminal 30 as keyboard keystrokes (s32 of Figure 3). An application is running on the Sales Terminal 30 to receive the keyboard keystrokes and enter them into a field 32. The carriage return signifies the end of the transmitted information and is detected by the application running on the Sales Terminal 30.

After the Intermediate Device 20 has transmitted the data to the Sales Terminal 30, the device 20 resets its memory to enable it to connect to and receive further information from other NFC devices that connect to it (s34 and s35 of Figure 4). Other NFC devices include cell phones and tablet computers.

The Intermediate Device 20 may comprise an antenna, radio, processor (with memory), and connector to an external computer (the Sales Terminal 30, for example). The antenna and radio may be wired into the processor and configured to receive and decode ISO14443 based signals, that are passed onto the processor. The connector to the external computer may be a serial connection, a USB style connection, posing as USB Human Interface Device (HID) device (e.g. keyboard), or another type of connection.

The processor may be programmed to reply to the radio signals with appropriate replies that are then encoded and transmitted back to the calling device, so that the calling device believes it is talking to a passive NFC tag (as defined by the NFC Forum).

The processor may, when asked to read the memory blocks, reply with a pre-configured set of data. When the remote device attempts to 'write' the memory blocks, the processor remembers the data being written, and then replies that the data has been written ok.

The Intermediate Device and the Terminal in the above-described embodiments and illustrated in the drawings may be integrated into a single device. For example, the Intermediate Device may be integrated into the Terminal.

The processor may then call the connected computer with the data that has been written. If the processor uses the 'memory' of the tag as its temporary storage to write, it should now reset that information back to its pre-configured data.

## Claims

1. A device comprising:
a NFC enabled circuit having a memory and being operable to receive data and store the received data in the memory; and
a microprocessor for reading the received data stored in the NFC enabled circuit memory; wherein,
the microprocessor is arranged to:
(i) detect when the NFC enabled circuit memory is altered by the addition of the received data; and
(ii) read the received data from the NFC enabled circuit memory.

2. A device according to claim 1, wherein the microprocessor further arranged to parse the received data and transmit the parsed data in a predetermined format.

3. A device according to any of claim 2, wherein the predetermined format is a text format.

4. A device according to claim 2 or claim 3, wherein the device is operable to emulate a Human Interface Device (HID) to transmit the parsed data.

5. A device according to any of claims 1 to 4, wherein the NFC enabled circuit operates in a passive NFC mode.

6. A device according to any of claims 1 to 5, wherein the NFC enabled circuit is operable to receive and store data from a second NFC enabled device operating in an active NFC mode.

7. A device according to any of claims 1 to 6, wherein the data is a type selected from the group consisting of a voucher code, a loyalty card number, a telephone number, a postal address, an Internet Protocol (IP) address, or a passport number.

8. A method of NFC comprising:
establishing a NFC connection to an intermediate device;
receiving of data by the intermediate device over the NFC connection using a NFC protocol;
storing the data in a memory of the intermediate device;
detecting that the memory of the intermediate device has been altered by the addition of the data; and
reading the received data from the memory of the intermediate device.

9. A method according to claim 8, further comprising transmitting the data by the intermediate device over a second connection.

10. A method according to claim 15, further comprising resetting the memory of the intermediate device after the data is transmitted by the intermediate device.

11. A NFC system comprising:
a NFC enabled mobile device; and
a NFC enabled intermediate device comprising a NFC enabled circuit having a memory and being operable to receive data and store the received data in the memory, and a microprocessor for reading the received data stored in the NFC enabled circuit memory; wherein
the mobile device is operable to set up a NFC connection with the intermediate device;
the mobile device is operable to send data over the NFC connection to the intermediate device where it is received by a NFC enabled circuit and stored in a memory of the NFC enabled circuit;
the microprocessor of the intermediate device is arranged to detect when the NFC enabled circuit memory is altered by the addition of the received data, and read the received data from the NFC enabled circuit memory.

12. A NFC system according to of claim 11, wherein the intermediate device is arranged to transmit the data to the terminal over the bus link.

13. A NFC system according to claims 11 or 12, wherein after the mobile device has set up a NFC connection with the intermediate device, the intermediate device arranged to transmit identifier information to the mobile device.

14. A NFC system according to claim 13, wherein the mobile device is arranged to launch an application after it receives the identifier information.

15. A NFC system according to claim 14, wherein there are a plurality of applications launchable on the mobile device and the specific application launched is dependent upon the content of the identifier information.

16. An NFC system according to claim 13, wherein an application is launched on the mobile device prior to the mobile device receiving the identifier information, and the received identifier information is or is not passed to the application dependant upon content of the identifier information.

17. A NFC system according to any of claims 14 to 16, wherein the launched application prompts a user of the mobile device to consent to sending the data over the NFC connection to the intermediate device.

18. A NFC system according to any of claims 14 to 16, wherein the launched application prompts a user of the mobile device to select one piece of data of a plurality of pieces of data to send over the NFC connection to the intermediate device.

19. A NFC system according to any of claims 14 to 16, wherein the launched application makes a decision whether or not to transmit data over the NFC connection to the intermediate device automatically, and the automatic decision is based upon data on the mobile device other than the received identifier information data.
